# EUROPÄISCHE PATENTSCHRIFT

(11) **EP 2 514 695 B1**
(45) Veröffentlichungstag und Bekanntmachung des Hinweises auf die Patenterteilung: **18.05.2016**
(21) Anmeldenummer: 12164270.6
(22) Anmeldetag: 16.04.2012
(51) Int. Cl.: B65G 47/64, B65G 21/12

(54) **Vorrichtung zum fördern von produkten, Förderlinie und Produktionslinie mit solcher Vorrichtung**
Device for transporting products, conveying line and production line with such device
Dispositif destiné au transport de produits, ligne de convoyage et ligne de production avec un tel dispositif

(30) Priorität: 18.04.2011 DE 102011017420
(43) Veröffentlichungstag der Anmeldung: 24.10.2012
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A1- 0 879 774
- EP-A1- 1 666 390
- EP-A2- 0 030 653
- DE-A1-102009 039 826
- GB-A- 820 731
- GB-A- 2 320 235
- US-A1- 2002 166 752

## Beschreibung

Die vorliegende Erfindung betrifft eine Vorrichtung zum Fördern von Produkten, insbesondere Lebensmittelprodukten, mit wenigstens einer Fördereinrichtung, die durch eine Antriebswelle antreibbar ist, um die Produkte jeweils einem von mehreren Ausgabebereichen zuzuführen, wobei die Fördereinrichtung eine Tragstruktur aufweist, welche zum individuellen Wechseln des Ausgabebereichs um eine Drehachse der Antriebswelle verschwenkbar ist.

Derartige Vorrichtungen werden beispielsweise dazu eingesetzt, Lebensmittelprodukte wie Fleisch, Wurst oder Käse portionsweise von einer Aufschneidevorrichtung wie einem Hochleistungs-Slicer zu einer Verpackungsmaschine zu transportieren. Durch Wechseln das Ausgabebereichs können insbesondere fehlgewichtige Produktportionen aus dem Produktfluss ausgeschleust werden, indem sie einer separaten Fördervorrichtung oder einem Sammelbehälter zugeführt werden. Durch Vorsehen mehrerer nebeneinander angeordneter Fördereinrichtungen ist es möglich, im Rahmen eines mehrspurigen Produktflusses eine relativ hohe Förderleistung zu erzielen. Eine allen Fördereinrichtungen gemeinsame Antriebswelle kann dabei den Aufwand zum Bereitstellen mehrerer voneinander unabhängiger Antriebe einschließlich der zugehörigen Ansteuerungseinrichtungen ersparen. Bei der Tragstruktur kann es sich beispielsweise um einen Wippentisch handeln, der verschwenkbar an der Antriebswelle gelagert ist.

Insbesondere bei einer Mehrzahl von nebeneinander angeordneten Fördereinrichtungen ergibt sich hierbei jedoch das Problem, dass eine Vielzahl von Drehlagern vorzusehen ist, welche aufgrund der im Allgemeinen relativ hohen Drehzahl der Antriebswelle entsprechend reibungsarm ausgelegt sein müssen. Beispielsweise können Wälzlager mit entsprechenden Dichtungen zum Einsatz kommen. Dadurch ergeben sich jedoch Probleme bei der Fertigung der Antriebswelle, da die strengen Toleranzanforderungen für die Lagersitze entlang der gesamten Länge der Antriebswelle zu erfüllen sind. Auch bei der Montage, Wartung und Reparatur gibt es Probleme, da insbesondere die im zentralen Bereich der Antriebswelle befindlichen Lagersitze schlecht zugänglich sind. Zudem ist der Gesamtaufbau der Vorrichtung vergleichsweise komplex und die Fehleranfälligkeit dementsprechend erhöht.

Die GB 2 320 235 A offenbart eine gattungsgemäße Förderanlage mit zwei hintereinander angeordneten Hilfsförderern, welche hydraulisch verschwenkbar sind.

In der US 2002/0166752 A1 ist ein Bandförderer offenbart, dessen Tragrahmen geknickt werden kann, um ihn aus der zugehörigen Lagerstruktur herausnehmen zu können.

Die EP 0 879 774 A1 offenbart eine Übergabevorrichtung für eine Produktförderanlage, bei welcher der ankommende Produktstrom mittels einer schwenkbaren Wippe zwischen einem Weitergabeband und einem quer zu der Förderrichtung betreibbaren Abführband aufteilbar ist. Ein beweglicher Schieber drückt hierbei die Produkte von der Wippe auf das Abführband.

In der EP 0 030 653 A2 ist eine Vorrichtung zum Fördern von Einwegwindeln offenbart, welche eine Verteilerstation in Form zweier paralleler und gemeinsam verkippbarer Bandförderer umfasst. Das Verkippen der beiden Bandförderer erfolgt mittels einer angetriebenen Kurbelanordnung über eine Gelenkarmanordnung.

In der DE 10 2009 039 826 A1 ist eine Vorrichtung zum Aufschneiden von Lebensmittelprodukten mit einer daran angeschlossenen Fördereinrichtung offenbart, wobei die Fördereinrichtung einen Schwenkrahmen enthält, welcher gelenkig mit einer Kolbenstange eines Pneumatikzylinders gekoppelt ist. Fertig aufgeschnittene Produktportionen werden mittels eines Portionssammelförderers zu einem Abgabebereich gefördert und von dort aus einer weiteren Verarbeitung zugeführt.

Es ist eine Aufgabe der Erfindung, bei einer Vorrichtung der genannten Art den Herstellungsaufwand zu verringern sowie eine einfachere Montage und Reparatur zu ermöglichen.

Die Lösung der Aufgabe erfolgt durch eine Vorrichtung mit den Merkmalen des Anspruchs 1. Erfindungsgemäß besteht zwischen der Tragstruktur und der Antriebswelle keine strukturelle Schwenkverbindung. Weiterhin ist die Tragstruktur derart mittels einer Gelenkarmanordnung an einem von der Antriebswelle beabstandeten Stützelement beweglich gelagert, dass durch Bewegen der Gelenkarmanordnung die Tragstruktur um die Drehachse der Antriebswelle verschwenkbar ist. Die Tragstruktur wird also um eine virtuelle Drehachse geschwenkt, die mit der Rotationsachse der Antriebswelle zusammenfällt. Dadurch dass die Tragstruktur an einem von der Antriebswelle beabstandeten Element abgestützt ist, kann eine reale, d.h. strukturelle Schwenkverbindung zwischen der Tragstruktur und der Antriebswelle entfallen, wodurch sich die entsprechenden Lager und Dichtungen einsparen lassen. Da das Stützelement nicht mit der Drehgeschwindigkeit der Antriebswelle rotieren muss, können zur Lagerung der Gelenkarmanordnung an dem Stützelement einfache, kostengünstige und zuverlässige Gleitlager anstelle von Wälzlagern verwendet werden. Dies erhöht die Lebensdauer der Fördervorrichtung und verringert ausfallbedingte Stillstandszeiten. Auch in hygienischer Hinsicht ist die Vermeidung einer realen Schwenkverbindung zwischen der Tragstruktur und der Antriebswelle von Vorteil. Das Stützelement kann starr und insbesondere gehäusefest sein. Sofern mehrere Fördereinrichtungen vorgesehen sind, ist vorzugsweise ein gemeinsames Stützelement für alle Fördereinrichtungen vorgesehen, um Aufwand und Kosten zu sparen.

Weiterbildungen der Erfindung sind in den abhängigen Ansprüchen, der Beschreibung sowie den beigefügten Zeichnungen angegeben.

Vorzugsweise besteht zwischen der Tragstruktur und der Antriebswelle keine Stützverbindung. Mit anderen Worten ist die Tragstruktur bis auf eine Antriebsverbindung, beispielsweise ein umlaufendes Transportband, von der Antriebswelle mechanisch entkoppelt. Da somit keine Lagersitze mit strengen Toleranzanforderungen an der Antriebswelle vorzusehen sind, können die Fertigungs- und Montagekosten wesentlich gesenkt werden. Auch eine leichtere Reinigung ist aufgrund der fehlenden mechanischen Stützverbindung möglich. Zudem besteht die Möglichkeit für ein vereinfachtes Sicherheitskonzept der Vorrichtung.

Gemäß einer Ausgestaltung der Erfindung verläuft das Stützelement parallel zu der Antriebswelle. Z.B. kann das Stützelement ein zylindrischer Stab sein, dessen Längsachse parallel zu einer Rotationsachse der Antriebswelle angeordnet ist. Hierdurch ergibt sich eine besonders einfache Konstruktion.

Es können auch mehrere nebeneinander angeordnete Fördereinrichtungen vorgesehen sein, welche durch eine gemeinsame Antriebswelle antreibbar sind und welche jeweilige Tragstrukturen aufweisen, die unabhängig voneinander um die Drehachse der Antriebswelle verschwenkbar sind, wobei jede Tragstruktur mittels einer eigenen Gelenkarmanordnung an dem Stützelement gelagert ist.

Weiterhin kann jeder Gelenkarmanordnung ein Antrieb zugeordnet sein, wobei die Antriebe unabhängig voneinander betreibbar sind. Die Tragstrukturen können somit auf einfache Weise unabhängig voneinander verschwenkt werden, um so den jeweiligen Ausgabebereich zu wechseln. D.h. es können z.B. auf allen Spuren fehlgewichtige Portionen aussortiert werden, ohne den Produktfluss auf den jeweils anderen Spuren zu unterbrechen.

Gemäß einer Ausführungsform der Erfindung ist die oder jede Fördereinrichtung als Band- oder Riemenförderer ausgebildet, wobei insbesondere ein Förderband oder eine Förderriemenanordnung um die Antriebswelle und um eine an der Tragstruktur gelagerte Umlenkrolle umläuft. Vorzugsweise stellen das Förderband oder die Förderriemenanordnung die einzige Verbindung zwischen der Antriebswelle und der Tragstruktur dar. Vorteilhaft ist hierbei insbesondere, dass das entsprechende Förderband nicht zwischen Lagerkomponenten der Tragstruktur eingeschlossen, d.h. "gefangen", ist. Dadurch ergibt sich insbesondere eine vereinfachte Wartung und Reinigung.

Die oder jede Tragstruktur kann einen Schwenktisch mit einer oder mehreren Führungs- oder Stützflächen für das Förderband oder die Förderriemenanordnung umfassen. Ein derartiger Schwenktisch ermöglicht ein effektives Sortieren von geförderten Produkten in unterschiedliche Ausgabebereiche.

Vorzugsweise umfasst die oder jede Gelenkarmanordnung ein Viergelenk, wobei das Stützelement einen Fixpunkt des Viergelenks bildet. Insbesondere kann die oder jede Gelenkarmanordnung eine Parallelkinematik mit zwei an voneinander beabstandeten Anlenkpunkten mit der Tragstruktur gelenkig verbundenen, vorzugsweise gleich langen, Parallelhebeln umfassen. Dabei ist vorzugsweise einer der Parallelhebel über einen Versatzhebel beweglich an dem Stützelement gelagert. Der Versatzhebel ermöglicht es, ein Ende der Tragstruktur unter Ausbildung eines die Stützverbindung zwischen der Tragstruktur und der Antriebswelle unterbrechenden Freiraums von der Antriebswelle weg zu versetzen.

Die beiden Parallelhebel können jeweils mit einem zu einer Verbindungslinie der Tragstruktur-Anlenkpunkte parallelen Koppelhebel gelenkig verbunden sein. Ein Verschwenken dieses Koppelhebels zieht ein paralleles Verschwenken der Tragstruktur nach sich.

Vorzugsweise liegen die Drehachse der Antriebswelle, eine Schwenkachse des Versatzhebels und eine Schwenkachse des Koppelhebels in einer gemeinsamen Ebene.

Die Erfindung betrifft auch eine Förderlinie, die zumindest einen Eingangsförderer, wenigstens eine Vorrichtung wie vorstehend beschrieben und zumindest eine Aufnahme- oder Puffereinrichtung mit mehreren Ausgabebereichen umfasst. Weiterhin betrifft die vorliegende Erfindung eine Produktionslinie, die wenigstens eine Schneidvorrichtung zum Aufschneiden von Produkten, insbesondere einen Hochleistungs-Slicer, und zumindest eine Förderlinie wie vorstehend erwähnt umfasst. Der Förderlinie kann eine Verpackungseinrichtung nachgeordnet sein, welche beispielsweise eine Robotereinheit und/oder eine Verpackungsmaschine umfasst.

Die Erfindung wird nachfolgend beispielhaft anhand der beigefügten Zeichnungen beschrieben.
- Fig. 1: zeigt eine Draufsicht auf eine erfindungsgemäße Produktionslinie, welche eine Schneidvorrichtung zum Aufschneiden von Lebensmittelprodukten, mehrere Produktfördervorrichtungen sowie eine Verpackungseinrichtung umfasst.
- Fig. 2: zeigt eine perspektivische Darstellung einer erfindungsgemäßen Vorrichtung zum Fördern von Lebensmittelprodukten.
- Fig. 3: ist eine vergrößerte Teildarstellung der Vorrichtung gemäß Fig. 2.
- Fig. 4: ist eine vereinfachte Seitenansicht der Vorrichtung gemäß Fig. 2, welche einen Wippentisch in einer ersten Schwenkstellung zeigt.
- Fig. 5: zeigt die Vorrichtung gemäß Fig. 4, wobei sich der Wippentisch in einer zweiten Schwenkstellung befindet.

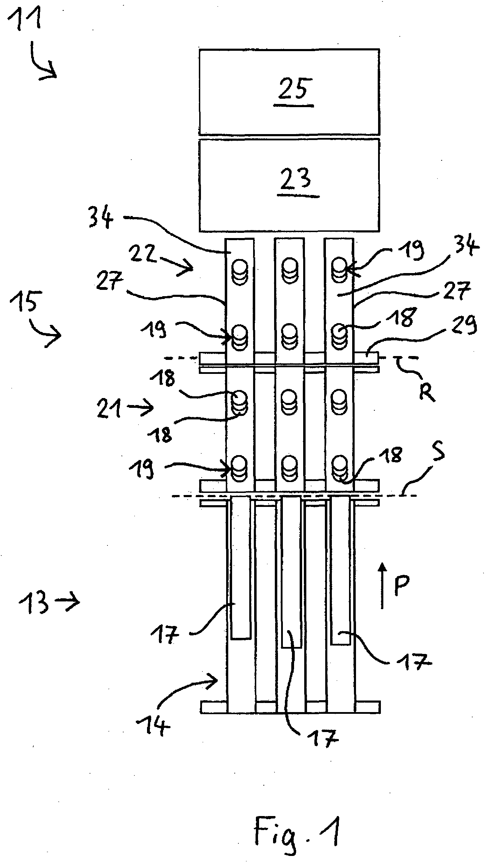

Fig. 1 zeigt in vereinfachter Form eine Produktionslinie 11 zum Erzeugen von verpackten Portionen z.B. aus Fleisch-, Wurst- oder Käsescheiben. Ein Hochleistungs-Slicer 13 der Produktionslinie 11 umfasst eine Produktzuführung 14, welche dazu ausgebildet ist, mehrere Produkte 17 nebeneinander entlang einer Produktförderrichtung P einer Schneidebene S zuzustellen, in welcher sich ein gemeinsames Schneidmesser (nicht dargestellt), insbesondere rotierend und/oder umlaufend, bewegt. Die durch das Schneidmesser abgetrennten Produktscheiben 18 werden in einzelnen Produktportionen 19 einer mehrspurigen Förderlinie 15 übergeben, welche einen Eingangsförderer 21, einen Sortierförderer 22, eine Puffereinrichtung 23 sowie eine Verpackungseinrichtung 25 umfasst. Die Produktportionen 19 werden auf diese Weise der Verpackungseinrichtung 25 zugeführt, wobei der Sortierförderer 22 u.a. in der Lage ist, fehlgewichtige Portionen aus dem Produktfluss auszuschleusen.

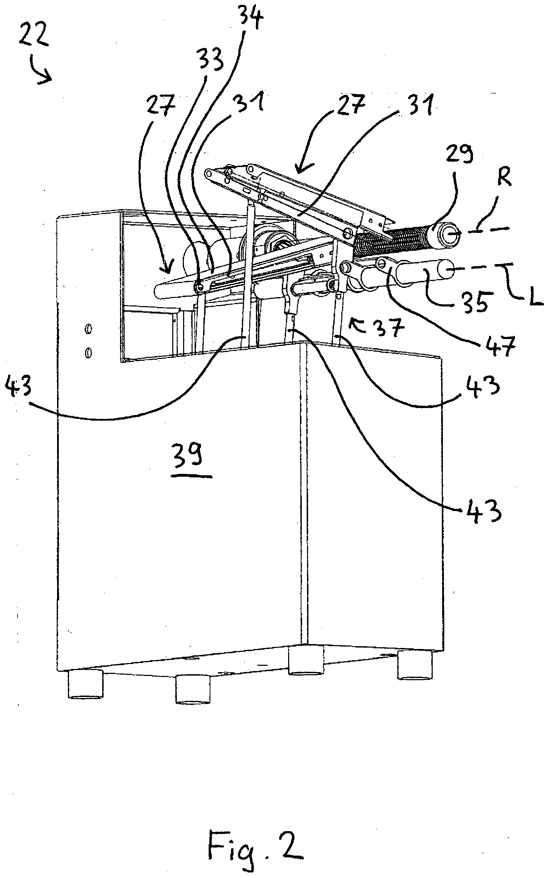

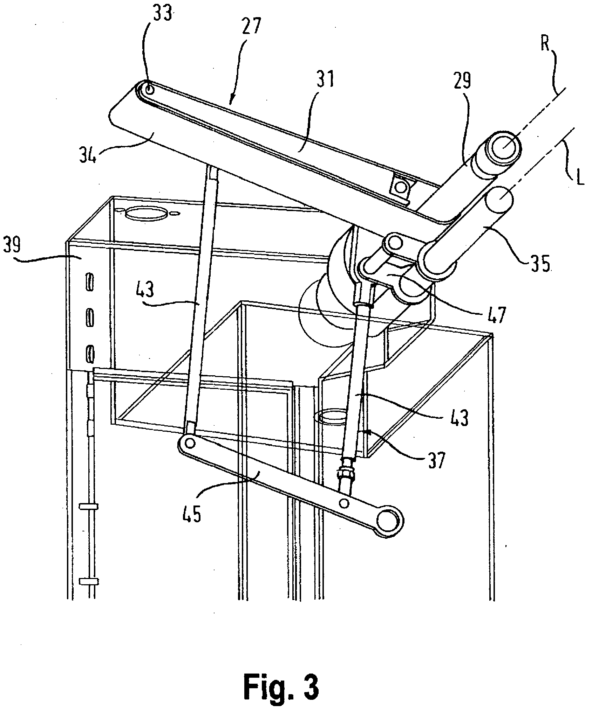

Unter Bezugnahme auf die Fig. 2 bis 5 wird der Sortierförderer 22 genauer beschrieben. Gemäß Fig. 2 und 3 umfasst der Sortierförderer 22 mehrere nebeneinander angeordnete Fördereinrichtungen, welche hier als Bandförderer 27 ausgebildet sind. Der Antrieb der Bandförderer 27 erfolgt über eine gemeinsame Antriebswelle 29.

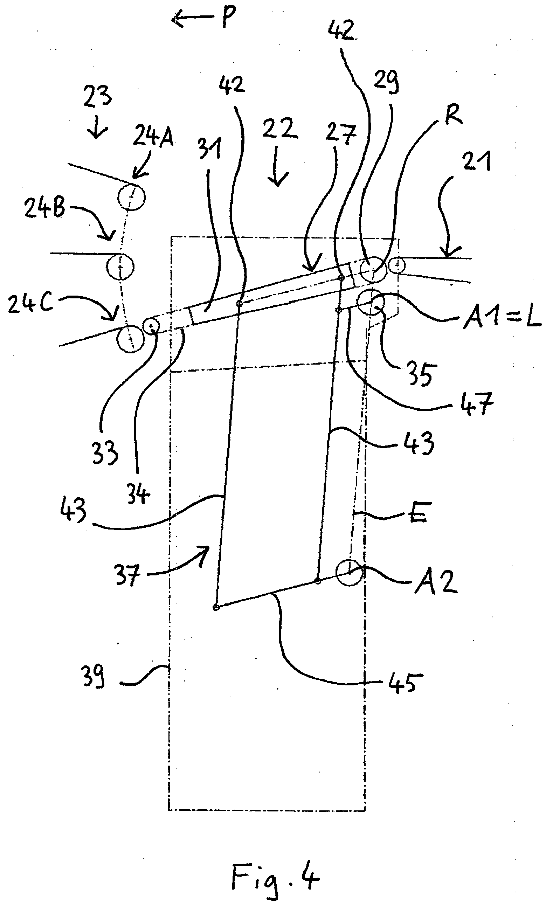

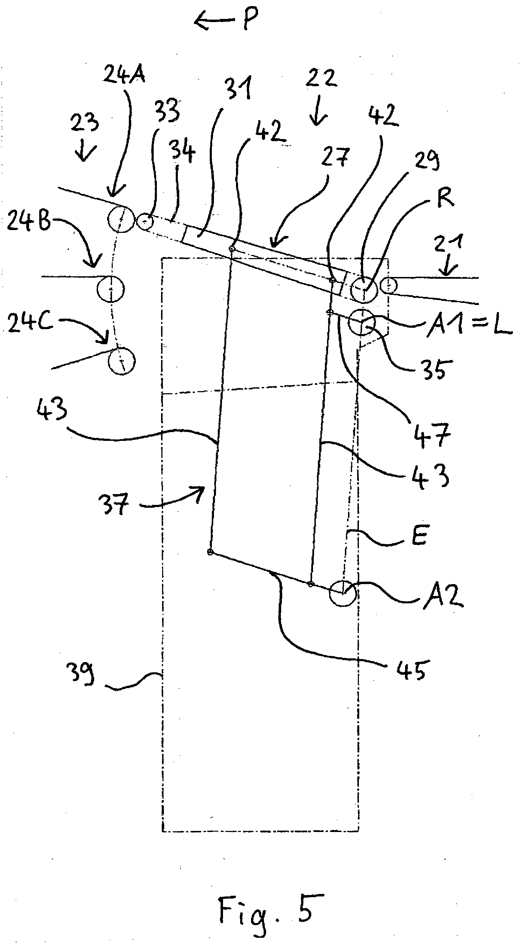

Unter weiterer Bezugnahme auf Fig. 4 und 5 umfasst jeder Bandförderer 27 eine Tragstuktur in Form eines Wippentisches 31, an welchem eine Umlenkrolle 33 drehbar gelagert ist. Ein Förderband 34 läuft um die Umlenkrolle 33 sowie um die Antriebswelle 29 um. Der Wippentisch 31 trägt nicht nur die Umlenkrolle 33, sondern dient auch zum Führen und/oder Stützen des Förderbands 34. Anstelle des Förderbands 34 könnte auch eine Anordnung von mehreren parallel umlaufenden Förderriemen vorgesehen sein.

In einem bestimmten Abstand von der Antriebswelle 29 ist ein parallel zu dieser angeordneter starrer Stützstab 35 vorgesehen, welcher unverdrehbar an einem Gehäuse 39 des Sortierförderers 22 angebracht ist. Jeder Wippentisch 31 ist mittels einer Gelenkarmanordnung 37 verschwenkbar an dem Stützstab 35 gelagert. Zwischen den Wippentischen 31 und der Antriebswelle 29 besteht hingegen keine mechanische Stützverbindung, sondern lediglich die antriebswirksame Verbindung über das umlaufende Förderband 34.

Jede Gelenkarmanordnung 37 umfasst eine Parallelkinematik mit zwei Parallelhebeln 43, die an voneinander beabstandeten Anlenkpunkten 42 gelenkig mit dem Wippentisch 31 verbunden sind. An den den Anlenkpunkten 42 entgegengesetzten Hebelenden sind die Parallelhebel 43 an einem Koppelhebel 45 angelenkt. Der Koppelhebel 45 erstreckt sich parallel zu der Verbindungslinie der Anlenkpunkte 42 und ist um eine Schwenkachse A2 verschwenkbar in dem Gehäuse 39 gelagert. Weiterhin ist ein Versatzhebel 47 vorgesehen, welcher einerseits an einem der Parallelhebel 43 angelenkt ist und andererseits um eine Schwenkachse A1 verschwenkbar an dem Stützstab 35 gelagert ist. Die Länge des Versatzhebels 47 entspricht dabei der Länge des über den hinteren Anlenkpunkt des Parallelhebels 43 hinausragenden Abschnitts des Koppelhebels 45, so dass die Drehachse R der Antriebswelle 29, die Schwenkachse A2 des Koppelhebels 45 sowie die Schwenkachse A1 des Versatzhebels 27, welche mit der Längsachse L des Stützstabs 35 zusammenfällt, in einer gemeinsamen Ebene E liegen.

Ein Bewegen der Gelenkarmanordnung 37, beispielsweise durch Verschwenken des Koppelhebels 45, durch Verschwenken des Versatzhebels 47 oder durch lineares Verschieben einer der beiden Parallelhebel 43, bewirkt ein Verschwenken des Wippentischs 31 um die Rotationsachse R der Antriebswelle 29, welche somit eine virtuelle Schwenkachse des Wippentischs 31 bildet. Durch Verschwenken der Wippentische 31 können die Produktportionen 19 einem von mehreren Ausgabebereichen 24A, 24B, 24C der Puffereinrichtung 23 zugeführt werden, welche in Fig. 4 und 5 vereinfacht als übereinander angeordnete Bandförderer dargestellt sind. Ein Antrieb zum Bewegen der Gelenkarmanordnung 37 kann dabei an beliebiger Stelle der sich zwischen dem Stützstab 35 und dem Wippentisch 31 erstreckenden kinematischen Kette erfolgen. Vorzugsweise ist jeder Gelenkarmanordnung 37 ein eigener Antrieb zugeordnet, wobei die Antriebe unabhängig voneinander betreibbar sind, um so während des Förderns der Produktportionen 19 bei jedem der Bandförderer ein individuelles Wechseln des Ausgabebereichs 24A, 24B, 24C vornehmen zu können. Je nach Ausgabebereich 24A, 24B, 24C werden die Produktportionen 19 entweder der Verpackungseinrichtung 25 (Fig. 1) oder z.B. einem nicht dargestellten Sammelbehälter für fehlgewichtige Portionen zugeführt.

Da die einzige mechanische Verbindung zwischen dem Wippentisch 31 und der Antriebswelle 29 das umlaufende Förderband 34 ist, kann die Antriebswelle 29 relativ einfach gestaltet sein. Insbesondere kann auf aufwendige Wälzlager und Dichtungen verzichtet werden, welche zum Abstützen der Wippentische 31 an der mit relativ hoher Drehzahl rotierenden Antriebswelle 29 erforderlich wären. Die Schwenkverbindung zwischen dem Versatzhebel 47 und dem starren Stützstab 35 kann mittels einfacher und robuster Gleitlager bewerkstelligt werden. Somit kann eine Produktfördervorrichtung mit mehreren nebeneinander angeordneten und unabhängig voneinander verkippbaren Wippentischen 31 auf einfache Weise hergestellt werden, ohne das Konzept der gemeinsamen Antriebswelle 29 aufgeben zu müssen. Weiterhin ist die Reinigung des Sortierförderers 22 erleichtert. Aufgrund der fehlenden Wälzlager einschließlich der zugehörigen Lagersitze und Dichtungen ist zudem eine effektivere Montage und ein leichterer Service möglich.

### Bezugszeichenliste

- 11: Produktionslinie
- 13: Hochleistungsslicer
- 14: Produktzuführung
- 15: Förderlinie
- 17: Produkt
- 18: Produktscheibe
- 19: Produktportion
- 21: Eingangsförderer
- 22: Sortierförderer
- 23: Puffereinrichtung
- 24A, 24B, 24C: Ausgabebereich
- 25: Verpackungseinrichtung
- 27: Bandförderer
- 29: Antriebswelle
- 31: Wippentisch
- 33: Umlenkrolle
- 34: Förderband
- 35: Stützstab
- 37: Gelenkarmanordnung
- 39: Gehäuse
- 42: Anlenkpunkt
- 43: Parallelhebel
- 45: Koppelhebel
- 47: Versatzhebel

- S: Schneidebene
- P: Produktförderrichtung
- R: Drehachse der Antriebswelle
- A1: Schwenkachse des Versatzhebels
- A2: Schwenkachse des Koppelhebels
- L: Längsachse
- E: gemeinsame Ebene

## Patentansprüche

1. Vorrichtung (22) zum Fördern von Produkten (19), insbesondere Lebensmittelprodukten, mit
wenigstens einer Fördereinrichtung (27), die durch eine Antriebswelle (29) antreibbar ist, um die Produkte (19) jeweils einem von mehreren Ausgabebereichen (24A, 24B, 24C) zuzuführen,
wobei die Fördereinrichtung (27) eine Tragstruktur (31) aufweist, welche zum individuellen Wechseln des Ausgabebereichs (24A, 24B, 24C) um eine Drehachse (R) der Antriebswelle (29) verschwenkbar ist, wobei
die Tragstruktur (31) derart mittels einer Gelenkarmanordnung (37) an einem von der Antriebswelle (29) beabstandeten Stützelement (35) beweglich gelagert ist, dass durch Bewegen der Gelenkarmanordnung (37) die Tragstruktur (31) um die Drehachse (R) der Antriebswelle (29) verschwenkbar ist,
**dadurch gekennzeichnet, dass**
zwischen der Tragstruktur (31) und der Antriebswelle (29) keine strukturelle Schwenkverbindung besteht.

2. Vorrichtung nach Anspruch 1,
**dadurch gekennzeichnet, dass**
zwischen der Tragstruktur (31) und der Antriebswelle (29) keine Stützverbindung besteht.

3. Vorrichtung nach Anspruch 1 oder 2,
**dadurch gekennzeichnet, dass**
das Stützelement (35) parallel zu der Antriebswelle (29) verläuft.

4. Vorrichtung nach zumindest einem der vorstehenden Ansprüche,
**dadurch gekennzeichnet, dass**
mehrere nebeneinander angeordnete Fördereinrichtungen (27) vorgesehen sind, welche durch eine gemeinsame Antriebswelle (29) antreibbar sind und welche jeweilige Tragstrukturen (31) aufweisen, die unabhängig voneinander um die Drehachse (R) der Antriebswelle (29) verschwenkbar sind, wobei jede Tragstruktur (31) mittels einer eigenen Gelenkarmanordnung (37) an dem Stützelement (35) gelagert ist.

5. Vorrichtung nach Anspruch 4,
**dadurch gekennzeichnet, dass**
jeder Gelenkarmanordnung (37) ein Antrieb zugeordnet ist, wobei die Antriebe unabhängig voneinander betreibbar sind.

6. Vorrichtung nach zumindest einem der vorstehenden Ansprüche,
**dadurch gekennzeichnet, dass**
die oder jede Fördereinrichtung (27) als Band- oder Riemenförderer ausgebildet ist, wobei insbesondere ein Förderband (34) oder eine Förderriemenanordnung um die Antriebswelle (29) und um eine an der jeweiligen Tragstruktur (31) gelagerte Umlenkrolle (33) umläuft.

7. Vorrichtung nach zumindest einem der vorstehenden Ansprüche,
**dadurch gekennzeichnet, dass**
die oder jede Tragstruktur (31) einen Schwenktisch mit einer oder mehreren Führungs-oder Stützflächen für das Förderband (34) oder die Förderriemenanordnung umfasst.

8. Vorrichtung nach zumindest einem der vorstehenden Ansprüche,
**dadurch gekennzeichnet, dass**
die oder jede Gelenkarmanordnung (37) ein Viergelenk umfasst, wobei das Stützelement (35) einen Fixpunkt des Viergelenks bildet.

9. Vorrichtung nach zumindest einem der vorstehenden Ansprüche,
**dadurch gekennzeichnet, dass**
die oder jede Gelenkarmanordnung (37) eine Parallelkinematik mit zwei an voneinander beabstandeten Anlenkpunkten (42) mit der Tragstruktur (31) gelenkig verbundenen, vorzugsweise gleich langen, Parallelhebeln (43) umfasst.

10. Vorrichtung nach Anspruch 9,
**dadurch gekennzeichnet, dass**
einer der Parallelhebel (43) über einen Versatzhebel (47) beweglich an dem Stützelement (35) gelagert ist.

11. Vorrichtung nach Anspruch 9 oder 10,
**dadurch gekennzeichnet, dass**
die beiden Parallelhebel (43) mit einem zu einer Verbindungslinie der Tragstruktur-Anlenkpunkte (42) parallelen Koppelhebel (45) gelenkig verbunden sind.

12. Vorrichtung nach Anspruch 11,
**dadurch gekennzeichnet, dass**
die Drehachse (R) der Antriebswelle (29), eine Schwenkachse (A1) des Versatzhebels (47) und eine Schwenkachse (A2) des Koppelhebels (45) in einer gemeinsamen Ebene (E) liegen.

13. Förderlinie (15), die umfasst:
wenigstens einen Eingangsförderer (21),
zumindest eine Vorrichtung (22) zum Fördern von Produkten (19) gemäß einem der vorstehenden Ansprüche, und
wenigstens eine Aufnahme- oder Puffereinrichtung (23) mit mehreren Ausgabebereichen (24A, 24B, 24C) zum Empfangen der geförderten Produkte (19).

14. Produktionslinie (11), die umfasst:
wenigstens eine Schneidvorrichtung (13) zum Aufschneiden von Produkten (17), insbesondere Hochleistungs-Slicer, und
zumindest eine Förderlinie (15) nach Anspruch 13.

15. Produktionslinie nach Anspruch 14,
**dadurch gekennzeichnet, dass**
der Förderlinie (15) eine Verpackungseinrichtung (25) nachgeordnet ist, welche insbesondere eine Robotereinheit und/oder eine Verpackungsmaschine umfasst.

## Claims

1. An apparatus (22) for conveying products (19), in particular food products, with
at least one conveyor device (27) which is drivable by a drive shaft (29) in order to supply said products (19) to one of a plurality of output areas (24A, 24B, 24C),
wherein said conveyor device (27) comprises a support structure (31) which is pivotable about an axis of rotation (R) of the drive shaft (29) for individually changing said output regions (24A, 24B, 24C), wherein said support structure (31) is pivotably supported by means of a jointed arm arrangement (37) at a support element (35) spaced apart from said drive shaft (29) such that, by moving said jointed arm arrangement (37), said support structure (31) is pivotable about said axis of rotation (R) of said drive shaft (29),
**characterized in that**
no structural pivot connection exists between said support structure (31) and said drive shaft (29).

2. An apparatus according to claim 1,
**characterized in that**
there is no supporting connection between said support structure (31) and said drive shaft (29).

3. An apparatus according to claim 1 or claim 2,
**characterized in that**
said support element (35) extends in parallel to said drive shaft (29).

4. An apparatus according to at least one of the preceding claims,
**characterized in that**
a plurality of conveyor devices (27) are provided arranged adjacent to one another which are drivable by a common drive shaft (29) and which comprise respective support structures (31) that can be pivoted independently of one another about the axis of rotation (R) of said drive shaft (29), with each support structure (31) being supported at said support element (35) by means of a separate jointed arm arrangement (37).

5. An apparatus according to claim 4,
**characterized in that**
a drive is associated with each jointed arm arrangement (37), with said drives being operable independently of each other.

6. An apparatus according to at least one of the preceding claims,
**characterized in that**
the or each conveyor device (27) is formed as a belt conveyor or strip conveyor, with in particular a conveyor belt (34) or a conveyor belt arrangement revolving around said drive shaft (29) and around a deflection roller (33) supported at said respective support structure (31).

7. An apparatus according to at least one of the preceding claims,
**characterized in that**
the or each support structure (31) comprises a pivot table with one or more guide surfaces or support surfaces for said conveyor belt (34) or said conveyor strip arrangement.

8. An apparatus according to at least one of the preceding claims,
**characterized in that**
the or each jointed arm arrangement (37) comprises a four-part link, with said support element (35) forming a fixed point of said four-part link.

9. An apparatus according to at least one of the preceding claims,
**characterized in that**
the or each jointed arm arrangement (37) comprises parallel kinematics with two parallel levers (43) preferably of equal length pivotably connected to the support structure (31) at linkage points (42) spaced apart from each other.

10. An apparatus according to claim 9,
**characterized in that**
one of said parallel levers (43) is movably supported at said support element (35) via a displacement lever (47).

11. An apparatus according to claim 9 or claim 10,
**characterized in that**
said two parallel levers (43) are each pivotably connected to a coupling lever (45) being in parallel to a connection line of said supporting structure linkage points (42).

12. An apparatus according to claim 11,
**characterized in that**
said axis of rotation (R) of said drive shaft (29), a pivot axis (A1) of said displacement lever (47) and a pivot axis (A2) of said coupling lever (45) lie in a common plane (E).

13. A conveyor line (15) comprising:
at least one input conveyor (21),
at least one apparatus (22) for conveying products (19) according to any one of the preceding claims, and
at least one reception device or buffer device (23) with a plurality of output regions (24A, 24B, 24C) for receiving said conveyed products (19).

14. A production line (11) comprising:
at least one cutting device (13) for slicing products (17), particularly a high-performance slicer, and
at least one conveyor line (15) according to claim 13.

15. A production line according to claim 14,
**characterized in that**
said conveyor line (15) is arranged upstream of a packaging device (25) which, for example, comprises a robot unit and/or a packaging machine.

## Revendications

1. Dispositif (22) pour convoyer des produits (19), en particulier des produits alimentaires, comprenant
au moins un dispositif de convoyage (27), qui est susceptible d'être entraîné par un arbre d'entraînement (29) afin d'amener les produits (19) respectivement à une zone parmi plusieurs zones de distribution (24A, 24B, 24C),
dans lequel le dispositif de convoyage (27) comprend une structure portante (31) qui est capable de pivoter autour d'un axe de rotation (R) de l'arbre d'entraînement (29) pour changer individuellement la zone de distribution (24A, 24B, 24C), dans lequel la structure portante (31) est montée sur un élément de soutien (35) écarté de l'arbre d'entraînement (29), de manière déplaçable au moyen d'un agencement à bras articulés (37), de telle façon qu'en déplaçant l'agencement à bras articulés (37) la structure portante (31) est capable de pivoter autour de l'axe de rotation (R) de l'arbre d'entraînement (29),
**caractérisé en ce qu'**il n'existe aucune liaison pivotante structurelle entre la structure portante (31) et l'arbre d'entraînement (29).

2. Dispositif selon la revendication 1,
**caractérisé en ce qu'**il n'existe aucune liaison de soutien entre la structure portante (31) et l'arbre d'entraînement (29).

3. Dispositif selon la revendication 1 ou 2,
**caractérisé en ce que** l'élément de soutien (35) s'étend parallèlement à l'arbre d'entraînement (29).

4. Dispositif selon l'une au moins des revendications précédentes,
**caractérisé en ce qu'**il est prévu plusieurs dispositifs de convoyage (27) agencés les uns à côté des autres, qui sont susceptibles d'être entraînés par un arbre d'entraînement commun (29) et qui comportent des structures portantes respectives (31), lesquelles sont susceptibles d'être pivotées indépendamment les unes des autres autour de l'axe de rotation (R) de l'arbre d'entraînement (29), et chaque structure portante (31) est montée sur l'élément de soutien (35) au moyen d'un propre agencement à bras articulés (37).

5. Dispositif selon la revendication 4,
**caractérisé en ce qu'**un entraînement est associé à chaque agencement à bras articulés (37), et les entraînements sont susceptibles de fonctionner indépendamment les uns des autres.

6. Dispositif selon l'une au moins des revendications précédentes,
**caractérisé en ce que** le ou chaque dispositif de convoyage (27) est réalisé sous forme de convoyeur à bande ou à courroie, et une bande de convoyage (34) ou un agencement à courroie de convoyage circule en particulier autour de l'arbre d'entraînement (29) et autour d'un rouleau de renvoi (33) monté en rotation sur la structure portante respective (31).

7. Dispositif selon l'une au moins des revendications précédentes,
**caractérisé en ce que** la ou chaque structure portante (31) inclut une table pivotante avec une ou plusieurs surfaces de guidage ou de soutien pour la bande de convoyage (34) ou pour l'agencement à courroie de convoyage.

8. Dispositif selon l'une au moins des revendications précédentes,
**caractérisé en ce que** le ou chaque agencement à bras articulés (37) inclut une articulation à quatre bras, dans laquelle l'élément de soutien (35) forme un point fixe de l'articulation à quatre bras.

9. Dispositif selon l'une au moins des revendications précédentes,
**caractérisé en ce que** le ou chaque agencement à bras articulés (37) inclut un dispositif cinématique parallèle avec deux leviers parallèles (43), de préférence de même longueur, reliés de manière articulée avec la structure portante (31) avec deux points d'articulation (42) à distance l'un de l'autre.

10. Dispositif selon la revendication 9,
**caractérisé en ce que** l'un des leviers parallèles (43) est monté mobile sur l'élément de soutien (35) via un levier de décalage (47).

11. Dispositif selon la revendication 9 ou 10,
**caractérisé en ce que** les deux leviers parallèles (43) sont reliés de manière articulée à un levier d'accouplement (45) parallèle à une ligne de liaison des points d'articulation (42) de la structure portante.

12. Dispositif selon la revendication 11,
**caractérisé en ce que** l'axe de rotation (R) de l'arbre d'entraînement (29), un axe de pivotement (A1) du levier de décalage (47) et un axe de pivotement (A2) du levier d'accouplement (45) sont situés dans un plan commun (E).

13. Ligne de convoyage (15) qui inclut :
au moins un convoyeur d'entrée (21),
au moins un dispositif (22) pour convoyer des produits (19) selon l'une des revendications précédentes, et
au moins un dispositif de réception ou dispositif tampon (23) avec plusieurs zones de distribution (24A, 24B, 24C) pour recevoir les produits convoyés (19).

14. Ligne de production (11) qui inclut :
au moins un dispositif de coupe (13) pour couper des produits (17), en particulier trancheuse à haute vitesse, et au moins une ligne de convoyage (15) selon la revendication 13.

15. Ligne de production selon la revendication 14,
**caractérisée en ce qu'**un système d'emballage (25) est agencé à la suite de la ligne de convoyage (15), système qui inclut en particulier une unité à robot et/ou une machine d'emballage.
